# EUROPÄISCHE PATENTSCHRIFT

(11) **EP 1 635 085 B1**
(45) Veröffentlichungstag und Bekanntmachung des Hinweises auf die Patenterteilung: **31.12.2008**
(21) Anmeldenummer: 05018988.5
(22) Anmeldetag: 01.09.2005
(51) Int. Cl.: F16F 15/12

(54) **Montagesicherung und Verfahren zum Montieren einer Montagesicherung sowie Verfahren zum Herstellen einer Montagesicherung**
Mounting protection and method of mounting a mounting protection and method of manufacturing a mounting protection
Protection de montage et et procédé de montage d'une protection de montage et procédé de fabrication d'une protection de montage

(30) Priorität: 11.09.2004 DE 102004043959
(43) Veröffentlichungstag der Anmeldung: 15.03.2006
(73) Patentinhaber: LuK Lamellen und Kupplungsbau Beteiligungs KG, 77815 Bühl (DE)
(72) Erfinder: Birk, Albert, 77830 Bühl (DE)
(74) Vertreter: Duschl, Edgar Johannes

(56) Entgegenhaltungen:
- DE-A1- 3 212 160
- DE-A1- 10 158 943
- DE-A1- 19 842 691
- DE-A1- 19 952 143
- DE-U1- 8 108 263
- US-A- 4 083 289
- US-A- 5 150 777
- US-A- 5 286 152
- US-A- 5 775 860
- US-A1- 2003 062 238

## Beschreibung

Die vorliegende Erfindung betrifft einen Torsionsschwingungsdämpfer für ein Fahrzeug mit einem als Primärmasse vorgesehenen Eingangsteil und einem als Sekundärmasse vorgesehenen Ausgangsteil, die mittels einer Montagesicherung gegen Relativbewegung arretiert sind. Ferner betrifft die vorliegende Erfindung ein Verfahren zum Montieren einer Montagesicherung, bei dem ein Verbindungselement mit einem Eingangsteil und einem Ausgangsteil eines Torsionsschwingungsdämpfers befestigt wird. Außerdem betrifft die Erfindung das zugehörige Herstellverfahren. Durch die DE 198 42 691 A1 ist eine Transportsicherung für die Sicherung einer Bremsscheibe an einer Kraftfahrzeug-Achse bekannt geworden.

Aus der Druckschrift DE 102 00 992 A1 ist beispielsweise ein üblicherweise bei Fahrzeugen verwendeter Torsionsschwingungsdämpfer bekannt. Der bekannte Torsionsschwingungsdämpfer weist zumindest ein Eingangsteil und ein Ausgangsteil auf, welche koaxial zueinander angeordnet und gegen den Widerstand von mindestens einer Energiespeichereinrichtung relativ zueinander verdrehbar sind. Üblicherweise werden bei der Montage eines derartigen Torsionsschwingungsdämpfers eine Montagesicherung zum Arretieren des als Primärseite bzw. Primärmasse ausgebildeten Eingangsteiles und des als Sekundärseite bzw. Sekundärmasse ausgebildeten Ausgangsteiles verwendet.

Eine aus dem Stand der Technik bekannte Montagesicherung weist ein Verbindungselement auf, wobei im montierten Zustand ein erster Abschnitt des Verbindungselementes der Primärmasse und ein zweiter Abstand der Sekundärmasse des Torsionsschwingungsdämpfers zugeordnet sind. Nach der Inbetriebnahme, also wenn das Eingangsteil relativ zu dem Ausgangsteil gedreht wird, können die beiden Abschnitte des Verbindungselementes zum Lösen der Montagesicherung voneinander getrennt werden. In nachteiliger Weise kann die bekannte Montagesicherung nur von Hand montiert werden und ist demzufolge nicht prozesssicher, sodass eine zusätzliche Sicherung erforderlich ist.

Demnach liegt der vorliegenden Erfindung die Aufgabe zugrunde, eine Montagesicherung der eingangs genannten Gattung vorzuschlagen, welche konstruktiv möglichst einfach aufgebaut ist und zudem einen prozesssicheren Betrieb gewährleistet. Ferner liegt der Erfindung die Aufgabe zugrunde, ein Verfahren zum Montieren einer Montagesicherung der eingangs genannten Gattung vorzuschlagen, welches ein automatisiertes Zuführen bzw. Montieren der Montagesicherung ermöglicht. Darüber hinaus liegt der Erfindung die Aufgabe zugrunde, ein Verfahren zum Herstellen einer Montagesicherung der eingangs genannten Gattung vorzuschlagen, welches besonders rationell und kostengünstig ist.

Bezüglich des Torsionsschwingungsdämpfers mit einer Montagesicherung wird die Aufgabe der Erfindung durch die Merkmale des Patentanspruches 1 gelöst. Hinsichtlich des Verfahrens zum Montieren einer Montagesicherung für einen Torsionsschwingungsdämpfer wird die Aufgabe durch die Merkmale des Patentanspruches 8 gelöst. Das erfindungsgemäße Herstellverfahren umfasst die Merkmale von Anspruch 12.

Vorteilhafte Weiterbildungen ergeben sich insbesondere aus den jeweiligen Unteransprüchen.

Die Montagesicherung kann automatisiert zugeführt werden, sodass eine sichere Verriegelung zwischen der Primärmasse und Sekundärmasse nach der Montage gewährleistet wird. Zudem sind auch nach erfolgter automatisierten Anbringung der Montagesicherung weitere erforderliche Arbeiten, insbesondere an der Kurbelwelle ohne weiteres möglich. Erst nach einem Motorstart, wenn der Torsionsschwingungsdämpfer in Betrieb genommen wird, kann die Montagesicherung auch automatisch gelöst werden, indem die beiden Abschnitte des Hülsenteiles bzw. des Zapfenteiles voneinander durch die Relativbewegung des Torsionsschwingungsdämpfers abgeschert werden. Aufgrund der erfindungsgemäßen Ausgestaltung des Verbindungselementes verbleiben die voneinander getrennten Abschnitte an Ihren jeweiligen Einbauorten, sodass eine optimale Betriebssicherheit gewährleistet wird.

Besonders vorteilhaft ist die automatische Montage der Montagesicherung, sodass ein prozesssicheres Vorgehen bei der Montage gewährleistet wird. Zudem kann bei der Montagesicherung ein vorbestimmtes Abschermoment eingestellt werden, indem die Abmessungen des Hülsenteiles und des Zapfenteiles in Abhängigkeit eines gewünschten Abschermomentes gewählt werden.

Im Rahmen einer vorteilhaften Weiterbildung der vorliegenden Erfindung wird vorgesehen, dass das Hülsenteil und das Zapfenteil jeweils zumindest einen Sollbruchbereich aufweisen, wobei die jeweiligen Sollbruchbereiche an dem Hülsenteil und an dem Zapfenteil miteinander korrespondieren. Somit kann nach erfolgtem Einbau der Montagesicherung sichergestellt werden, dass die Sollbruchbereiche an dem Hülsenteil und an dem Zapfenteil derart in Deckung liegen, dass nach der Inbetriebnahme ein möglichst glattes Abscheren zum Lösen der Montagesicherung an den jeweiligen Sollbruchbereichen erfolgen kann. Auf diese Weise kann sichergestellt werden, dass die jeweils getrennten Abschnitte des Verbindungselementes an dem Eingangsteil bzw. an dem Ausgangsteil verbleiben und nicht in mehrere Einzelteile zerbrechen, sodass ein ordnungsgemäßer Betrieb nach dem Lösen der Montagesicherung sichergestellt wird.

Um das Abscheren der zutrennenden Abschnitte des Verbindungselementes weiter zu optimieren, kann gemäß einer nächsten Weiterbildung der Erfindung vorgesehen sein, dass jeder Sollbruchbereich jeweils als Einkerbung ausgebildet ist. Bei einer etwa kreisförmigen Querschnittsform des Hülsenteiles und des Zapfenteiles kann die Einkerbung eine Materialschwächung bewirken, sodass möglichst glatte Abscherkanten an dem Hülsenteil und dem Zapfenteil realisiert werden.

Eine weitere Ausführungsform der vorliegenden Erfindung sieht vor, dass der Außendurchmesser des Zapfenteiles an den jeweiligen Innendurchmesser des Hülsenteiles angepasst ist. Somit kann sichergestellt werden, dass das Zapfenteil im montierten Zustand vollständig in das Hülsenteil eingeschoben werden kann. Vorzugsweise kann zwischen dem Zapfenteil und dem Hülsenteil eine Presspassung als Verbindung vorgesehen sein, sodass auch nach dem Abscheren eine sichere Verbindung zwischen dem Hülsenteil und dem Zapfenteil realisiert wird.

Um eine sichere Verbindung zwischen dem Hülsenteil und dem Eingangsteil bzw. Ausgangsteil bei der Montagesicherung zu realisieren, kann der Umfangsbereich des Hülsenteiles an den jeweiligen Durchmesser der Bohrung des den jeweiligen Abschnitt des Hülsenteiles aufnehmenden Eingangsteiles und des aufnehmenden Ausgangsteiles angepasst werden. Auch diese Verbindung kann vorzugsweise als Presspassung ausgebildet sein.

Um eine aufwändige Ausrichtung bei der Montage des Verbindungselementes der Montagesicherung zu vermeiden, kann gemäß einer vorteilhaften Ausgestaltung der Erfindung vorgeschlagen werden, dass das dem Eingangsteil zugeordnete Ende des Hülsenteiles als etwa kragenförmiger Flanschrand oder dergleichen ausgebildet ist. Somit kann das Hülsenteil so weit in axialer Richtung in die jeweiligen Bohrungen des Eingangsteiles und des Ausgangsteiles eingeschoben werden, dass der Flanschrand an dem Bohrungsrand des Eingangsteiles formschlüssig anliegt.

In diesem Zusammenhang ist es besonders vorteilhaft, wenn das dem Ausgangsteil zugeordnete Ende des Hülsenteiles zumindest ein als Gegenlager für den Flanschrand wirkendes Rastelement oder dergleichen aufweist. Auf diese Weise wird, soweit das Hülsenteil vollständig in den Bohrungen eingeschoben ist, eine Verrastung durch die Rastelemente bewirkt, sodass ein axiales Verschieben des Verbindungselementes bzw. des Hülsenteiles mit dem Zapfenteil unbeabsichtigt nicht erfolgen kann. Es sind auch andere Möglichkeiten denkbar, die ein möglichst einfaches Ausrichten und Fixieren des Verbindungselementes der Montagesicherung gewährleisten.

Die der Erfindung zugrunde liegende Aufgabe kann ferner durch ein erfindungsgemäßes Verfahren zum Montieren einer Montagesicherung in einem Torsionsschwingungsdämpfer nach einem der Ansprüche 1-7, gelöst werden, bei dem ein Verbindungselement nach der Montage eines Eingangsteiles und eines Ausgangsteiles eines Torsionsschwingungsdämpfers befestigt wird, wobei als Verbindungselement ein in ein Hülsenteil einschiebbares Zapfenteil verwendet wird, welches zum Verriegeln des Eingangsteiles mit dem Ausgangsteil in das Hülsenteil eingeschoben wird. Durch das Einschieben des Zapfenteils kann quasi ein einteiliges Verbindungselement realisiert werden, bei dem ein Abschnitt dem Eingangsteil und ein zweiter Abschnitt dem Ausgangsteil zugeordnet sind. Besonders vorteilhaft ist es, dass mit dem erfindungsgemäßen Verfahren eine automatisierte Zuführung der Montagesicherung ermöglicht wird.

Vorzugsweise kann das Einschieben des Zapfenteiles durch die Verwendung eines Montagewerkzeuges erleichtert werden. Das Montagewerkzeug kann beliebig ausgestaltet sein. Beispielsweise kann das Montagewerkzeug einen Aufnahmebereich für das vorstehende Zapfenteil aufweisen und mit einer Anschlagfläche an dem Hülsenteil anliegen. Durch das Aufbringen einer im Wesentlichen axial gerichteten Kraft kann das Hülsenteil zunächst in die jeweiligen Bohrungen des Eingangsteiles und des Ausgangsteiles eingeschoben werden, bis eine korrekte Position des Hülsenteiles an dem Eingangsteil und an dem Ausgangsteil realisiert ist. Danach kann das Zapfenteil vollständig in das Hülsenteil eingeschoben werden, um eine korrekte Ausrichtung der Montagesicherung sicherzustellen.

Um das Montageverfahren während der Montage entsprechend ansteuern zu können, kann gemäß einer nächsten Weiterbildung vorgesehen sein, dass der Montagevorgang durch eine Kraft-Wegmesseinrichtung oder dergleichen überwacht wird. Auf diese Weise kann der automatisierte Montageprozess vollständig überwacht werden.

Des Weiteren kann die der Erfindung zugrunde liegende Aufgabe durch ein Verfahren zum Herstellen , eines Torsionsschwingungsdämpfers nach einem der Ansprüche 1 bis 7 gelöst werden, indem als Verbindungselement ein mit einem verschiebbaren Zapfenteil vorgesehenes Hülsenteil durch Spritzgießen in einem gemeinsamen Spritzwerkzeug hergestellt wird. Dabei wird vorzugsweise das Hülsenteil und das Zapfenteil in axialer Richtung hintereinander in dem Werkzeug hergestellt.

Gemäß einer Weiterbildung kann das Zapfenteil und das Hülsenteil nach der Herstellung entformt werden, wobei das Zapfenteil bei der Entformung abschnittsweise in das Hülsenteil eingeschoben wird, sodass quasi ein einteiliges zur Montage fertig gestelltes Verbindungselement hergestellt wird, welches automatisiert als Montagesicherung in einen Torsionsschwingungsdämpfer eingesetzt werden kann.

Nachfolgend wird die Erfindung anhand der Zeichnungen näher erläutert.
Es zeigen:
- Figur 1: eine dreidimensionale Ansicht einer möglichen Ausführungsform einer Montagesicherung;
- Figur 2: eine Seitenansicht der Montagesicherung gemäß Figur 1;
- Figur 3: eine geschnittene Teilansicht eines Torsionsschwingungsdämpfers mit einer montierten Montagesicherung;
- Figur 4: eine geschnittene Teilansicht gemäß Figur 3 mit der Montagesicherung bei der Montage;
- Figur 5: eine Seitenansicht der Montagesicherung in einem abgescherten Zustand eines Verbindungselementes der Montagesicherung.

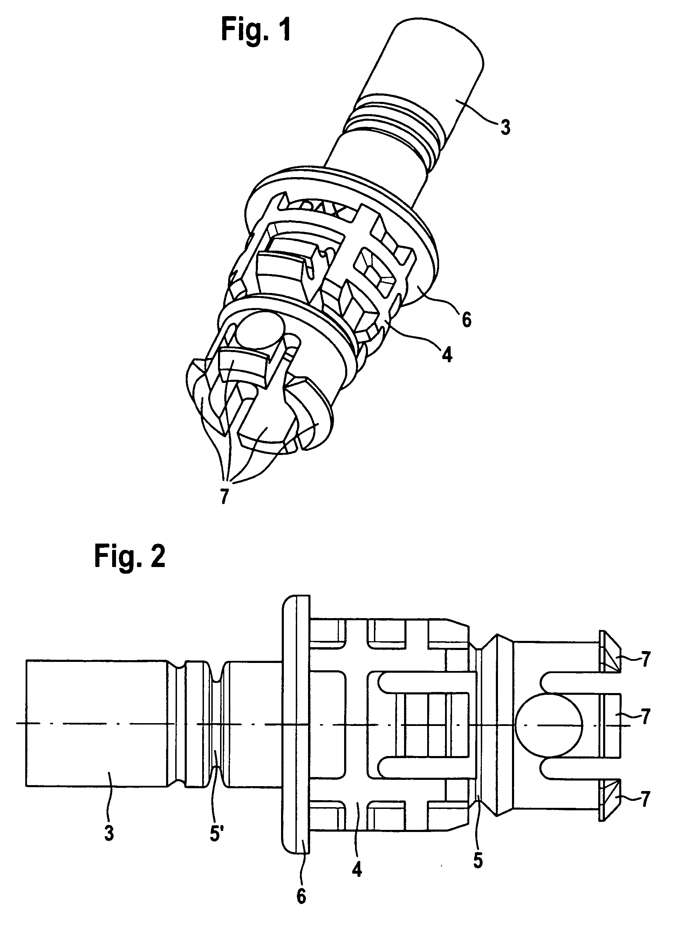

In den Figuren 1 bis 5 ist eine mögliche Ausführungsform einer Montagesicherung zum Arretieren einer an einer Kurbelwelle einer Brennkraftmaschine eines Kraftfahrzeuges befestigbaren Primärmasse und einer koaxial zu der Primärmasse verdrehbaren Sekundärmasse 2 eines als Zweimassenschwungrad ausgebildeten Torsionsschwingungsdämpfers dargestellt.

In Figur 1 ist die Montagesicherung mit einem Verbindungselement gezeigt, welches ein ein verschiebbares Zapfenteil 3 aufweisendes Hülsenteil 4 umfasst. Dabei weisen das Zapfenteil 3 und das Hülsenteil 4 etwa rotationssymmetrische Querschnittsformen auf. Das Zapfenteil 3 weist einen Außendurchmesser auf, der an den Innendurchmesser des Hülsenteiles 4 angepasst ist. Figur 2 zeigt eine Seitenansicht der vormontierten Montagesicherung gemäß Figur 1. Dabei ist das Zapfenteil 3 etwas in das Hülsenteil 4 eingeschoben, sodass das Zapfenteil 3 verliersicher an dem Hülsenteil 4 befestigt ist. Somit wird eine quasi einteilige Montagesicherung gemäß der vorliegenden Erfindung realisiert, welche montagefertig hergestellt wird.

Aus den Figuren 1 und 2 ist ebenfalls ersichtlich, dass das Hülsenteil 4 und das Zapfenteil 3 jeweils zumindest einen korrespondierenden Sollbruchbereich 5, 5' aufweisen. Die Sollbruchbereiche 5, 5' sind bei dieser Ausführungsform als Einkerbungen ausgebildet, wobei die jeweiligen Sollbruchbereich 5, 5' an dem Hülsenteil 4 und an dem Zapfenteil 3 derart positioniert sind, dass, wenn das Zapfenteil 3 vollständig in das Hülsenteil 4 eingeschoben ist, die als Einkerbungen ausgebildeten Sollbruchbereiche 5, 5' deckungsgleich in axialer Ausrichtung angeordnet sind. Das Hülsenteil 4 weist ferner an dem dem als Primärmasse ausgebildeten Eingangsteil 1 zugeordneten Ende einen etwa kragenförmigen Flanschrand 6 auf. Das andere der Sekundärmasse zugeordnete Ende des Hülsenteiles 4 ist als Gegenlager für den Flanschrand 6 mit mehreren Rastelementen 7 ausgerüstet. Auf diese Weise kann das Hülsenteil 4 der Montagesicherung im montierten Zustand sicher an dem Eingangsteil 1 und dem Ausgangsteil 2 des Torsionsschwingungsdämpfers befestigt werden.

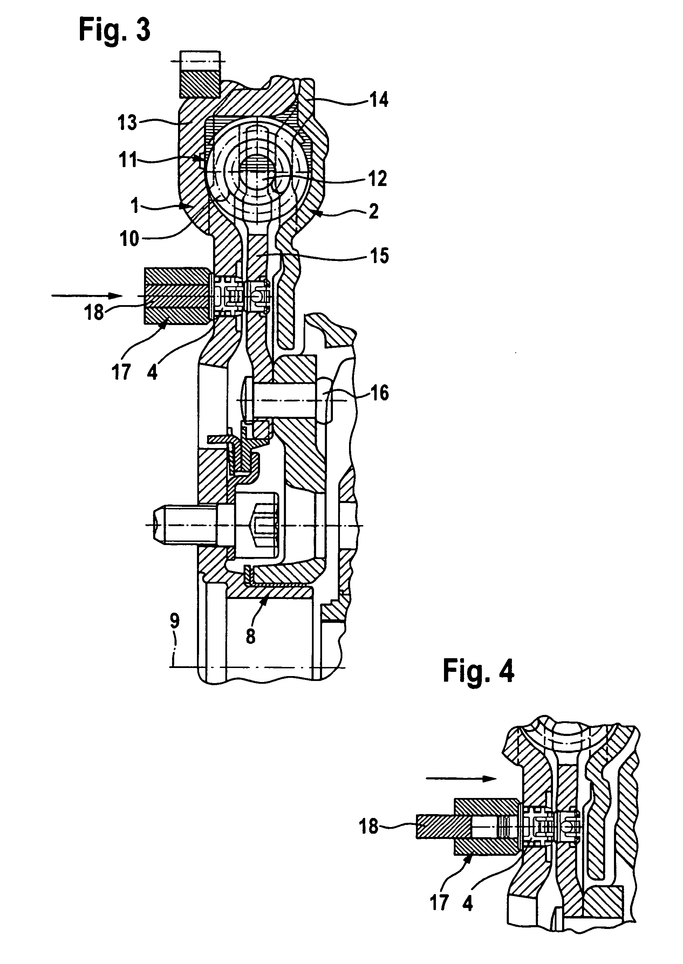

In den Figuren 3 und 4 ist ein montierter bzw. teilmontierter Zustand der Montagesicherung an einem Zweimassenschwungrad als Torsionsschwingungsdämpfer dargestellt, wobei im Wesentlichen nur die für die Erfindung bedeutende Bauteile beschrieben und bezeichnet sind.

In Figur 3 ist das Zweimassenschwungrad gezeigt, welches die an einer Kurbelwelle einer Brennkraftmaschine eines Kraftfahrzeuges befestigbare Primärmasse umfasst, an der mittels eines Lagers 8 die Sekundärmasse koaxial und verdrehbar um eine Drehachse 9 gelagert ist. Das als Primärmasse vorgesehene Eingangsteil 1 ist mit dem als Sekundärmasse vorgesehenen Ausgangsteil 2 über eine komprimierbare Energiespeicher 10 aufweisende Dämpfungseinrichtung 11 antriebsmäßig verbunden. Der Energiespeicher 10, welcher in Figur 3 als in Umfangsrichtung wirkende Schraubenfedern ausgebildet ist, ist in einer Kammer 12 aufgenommen, die teilweise mit einem viskosen Medium gefüllt sein kann. Die Kammer 12 ist durch zwei aus Blech herstellbare Bauteile 13, 14 begrenzt. Die Bauteile 13, 14 weisen Abstützbereiche für den Energiespeicher 10 auf. Das Ausgangsteil 2 der elastischen Dämpfungseinrichtung 11 umfasst ein flanschförmiges Bauteil 15. Bei einer Relativbewegung zwischen dem Flanschteil 15 und dem Eingangsteil 1 werden die Energiespeicher 10 zwischen den Auslegern und den Abstützbereichen komprimiert. Die radial inneren Bereiche des Flanschbauteiles 15 sind mittels Nieten 16 mit dem Ausgangsteil bzw. der Sekundärmasse 2 fest verbunden.

Die Montagesicherung wird mit einem Montagewerkzeug 17 an dem als Primärmasse ausgebildeten Eingangsteil 1 und den als Sekundärmasse wirkenden Ausgangsteil 2 befestigt, wobei in Figur 3 der montierte Zustand gezeigt ist, bei dem das Hülsenteil 4 in den Bohrungen des Eingangsteiles 1 und des Ausgangsteiles 2 befestigt ist, wobei der Umfangsbereich des Hülsenteiles 4 an den jeweiligen Innendurchmesser der Bohrungen angepasst ist. Ferner ist der Außendurchmesser des Zapfenteiles 3 an den Innendurchmesser des Hülsenteiles 4 angepasst, sodass das Zapfenteil 3 nach dem Einschieben in das Hülsenteil 4 mittels Presspassung in dem Hülsenteil 4 gehalten ist. Somit ist das Zapfenteil 3 vollständig in dem Hülsenteil 4 aufgenommen. Auf diese Weise ist das Eingangsteil 1 mit dem Ausgangsteil 2 durch die Montagesicherung verriegelt, sodass Relativbewegungen nicht möglich sind.

In Figur 4 ist die Montagesicherung während der Montage gezeigt. Dabei ist das Hülsenteil 4 bereits durch das Montagewerkzeug 17 in die Bohrungen des Eingangsteiles 1 und des Ausgangsteiles 2 eingeschoben und darin befestigt. Der an dem Montagewerkzeug 17 vorgesehene axial bewegbare Bolzen 18 wird in einem nächsten Montageschritt in axialer Richtung bewegt, sodass das Zapfenteil 3 vollständig in das Hülsenteil 4 eingeschoben werden kann und somit der in Figur 3 gezeigte Zustand erreicht wird, bei dem die Montagesicherung vollständig montiert ist.

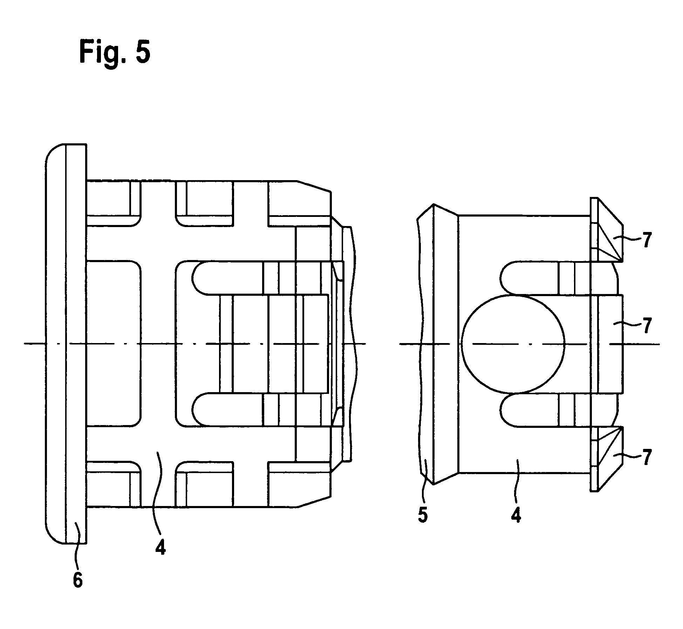

Schließlich zeigt Figur 5 einen abgescherten Zustand der Montagesicherung nach dem Lösen der Montagesicherung. In diesem Zustand ist sowohl das Hülsenteil 4 als auch das in dem Hülsenteil 4 eingeschobene Zapfenteil 3 an den jeweiligen Sollbruchbereichen 5, 5' durch Relativbewegungen nach dem Starten des Motors abgeschert worden. Die jeweils voneinander angetrennten Abschnitte verbleiben dabei an ihren jeweiligen Einbauorten, sodass ein sicherer Betrieb des Zweimassenschwungrades nach dem Lösen der Montagesicherung gewährleistet werden kann.

### Bezugszeichenliste

- 1.: Eingangsteil
- 2.: Ausgangsteil
- 3.: Zapfenteil
- 4.: Hülsenteil
- 5.: 5, 5' Sollbruchbereich
- 6.: Flanschrand
- 7.: Rastelemente
- 8.: Lager
- 9.: Drehachse
- 10.: Energiespeicher
- 11.: Dämpfungseinrichtung
- 12.: Kammer
- 13.: Bauteil
- 14.: Bauteil
- 15.: Flanschbauteil
- 16.: Nieten
- 17.: Montagewerkzeug
- 18.: Bolzen

## Patentansprüche

1. Torsionsschwingungsdämpfer für ein Fahrzeug mit einem als Primärmasse vorgesehenen Eingangsteil (1) und einem als Sekundärmasse vorgesehenen Ausgangsteil (2), die mittels einer Montagesicherung gegen Relativbewegung arretiert sind, wobei die Montagesicherung zumindest ein Verbindungselement aufweist, wobei im montierten Zustand des Verbindungselements ein erster Abschnitt des Verbindungselementes der Primärmasse und ein zweiter Abschnitt der Sekundärmasse zugeordnet ist, und wobei die beiden Abschnitte zum Lösen der Montagesicherung durch Inbetriebnahme des Torsionsschwingungsdämpfers voneinander trennbar sind, wobei das Verbindungselement ein Hülsenteil (4) und ein gegenüber diesem verschiebbares, jedoch verliersicher gehaltenes Zapfenteil (3) aufweist.

2. Torsionsschwingungsdämpfer nach Anspruch 1, **dadurch gekennzeichnet, dass** das Hülsenteil (4) und das Zapfenteil (3) jeweils zumindest einen korrespondierenden Sollbruchbereich (5, 5') aufweist.

3. Torsionsschwingungsdämpfer nach Anspruch 2, **dadurch gekennzeichnet, dass** der Sollbruchbereich (5, 5') jeweils als Einkerbung an dem Hülsenteil (4) und an dem Zapfenteil (3) ausgebildet ist.

4. Torsionsschwingungsdämpfer nach einem der vorangehenden Ansprüche, **dadurch gekennzeichnet, dass** der Außendurchmesser des Zapfenteiles (3) an den Innendurchmesser des Hülsenteiles (4) angepasst ist.

5. Torsionsschwingungsdämpfer nach einem der vorangehenden Ansprüche, **dadurch gekennzeichnet, dass** der Umfangsbereich des Hülsenteiles (4) an den jeweiligen Innendurchmesser der Bohrung des den jeweiligen Abschnitt des Hülsenteiles (4) aufnehmenden Eingangsteiles (1) und des Ausgangsteiles (2) angepasst ist.

6. Torsionsschwingungsdämpfer nach einem der vorangehenden Ansprüche, **dadurch gekennzeichnet, dass** das dem Eingangsteil (1) zugeordnete Ende des Hülsenteiles (4) als Flanschrand (6) ausgebildet ist.

7. Torsionsschwingungsdämpfer nach Anspruch 6, **dadurch gekennzeichnet, dass** das dem Ausgangsteil (2) zugeordnete Ende des Hülsenteiles (4) zumindest ein als Gegenlager für den Flanschrand (6) wirkendes Rastelement (7) aufweist.

8. Verfahren zum Montieren einer Montagesicherung in einem Torsionsschwingungsdämpfer nach einem der Ansprüche 1 bis 7, bei dem das Verbindungselement mit einem Eingangsteil (1) und einem Ausgangsteil (2) des Torsionsschwingungsdämpfers befestigt wird, **dadurch gekennzeichnet, dass** das Verbindungselement ein Hülsenteil (4) und ein in dieses einschiebbares Zapfenteil (3) aufweist, und zum Verriegeln des Eingangsteiles (1) mit dem Ausgangsteil (2) das Zapfenteil in das Hülsenteil (4) eingeschoben wird.

9. Verfahren nach Anspruch 8, **dadurch gekennzeichnet, dass** zum Einschieben des Zapfenteiles (3) ein Montagewerkzeug (17) verwendet wird.

10. Verfahren nach Anspruch 9, **dadurch gekennzeichnet, dass** mit dem Montagewerkzeug (17) zunächst das Hülsenteil (4) mit dem vormontierten Zapfenteil (3) an dem Eingangsteil (1) und an dem Ausgangsteil (2) befestigt wird, und dass danach das Zapfenteil (3) vollständig in das Hülsenteil (4) eingeschoben wird.

11. Verfahren nach einem der Ansprüche 8 bis 10, **dadurch gekennzeichnet, dass** der Montagevorgang durch eine Kraft-Wegmesseinrichtung überwacht wird.

12. Verfahren zum Herstellen eines Torsionsschwingungsdämpfers nach einem der Ansprüche 1 bis 7, **dadurch gekennzeichnet, dass** als Verbindungselement ein mit einem verschiebbaren Zapfenteil (3) vorgesehenes Hülsenteil (4) durch Spritzgießen in einem gemeinsamen Spritzwerkzeug hergestellt wird.

13. Verfahren nach Anspruch 12, **dadurch gekennzeichnet, dass** das Zapfenteil (3) und das Hülsenteil (4) nach der Herstellung entformt werden.

14. Verfahren nach Anspruch 13, **dadurch gekennzeichnet, dass** das Zapfenteil (3) bei der Entformung abschnittsweise in das Hülsenteil (4) eingeschoben wird.

## Claims

1. Torsional vibration damper for a vehicle, with an input part (1) which is provided as the primary mass and with an output part (2) which is provided as the secondary mass, which parts are locked against relative movement by means of a mounting protection means, wherein the mounting protection means has at least one connecting element, wherein, in the mounted state of the connecting element, a first section of the connecting element is assigned to the primary mass and a second section is assigned to the secondary mass, and wherein, in order to release the mounting protection means, the two sections can be separated from each other by putting the torsional vibration damper into operation, and wherein the connecting element has a sleeve part (4) and a pin part (3) which is displaceable in relation to the latter, but is held captively.

2. Torsional vibration damper according to Claim 1, **characterized in that** the sleeve part (4) and the pin part (3) each have at least one corresponding predetermined breaking region (5, 5').

3. Torsional vibration damper according to Claim 2, **characterized in that** the predetermined breaking region (5, 5') is designed as a respective notch on the sleeve part (4) and on the pin part (3).

4. Torsional vibration damper according to one of the preceding claims, **characterized in that** the outside diameter of the pin part (3) is matched to the inside diameter of the sleeve part (4).

5. Torsional vibration damper according to one of the preceding claims, **characterized in that** the circumferential region of the sleeve part (4) is matched to the particular inside diameter of the bore of the input part (1) and of the output part (2) receiving the particular section of the sleeve part (4).

6. Torsional vibration damper according to one of the preceding claims, **characterized in that that** end of the sleeve part (4) which is assigned to the input part (1) is designed as a flange edge (6).

7. Torsional vibration damper according to Claim 6, **characterized in that** that end of the sleeve part (4) which is assigned to the output part (2) has at least one latching element (7) which acts as a counter bearing for the flange edge (6).

8. Method of mounting a mounting protection means in a torsional vibration damper according to one of Claims 1 to 7, in which the connecting element is fastened to an input part (1) and an output part (2) of the torsional vibration damper, **characterized in that** the connecting element has a sleeve part (4) and a pin part (3) which can be pushed into the latter, and, in order to lock the input part (1) to the output part (2), the pin part is pushed into the sleeve part (4).

9. Method according to Claim 8, **characterized in that** a mounting tool (17) is used to push in the pin part (3).

10. Method according to Claim 9, **characterized in that,** by means of the mounting tool (17), first of all the sleeve part (4) together with the prefitted pin part (3) is fastened to the input part (1) and to the output part (2), and **in that** the pin part (3) is then pushed completely into the sleeve part (4).

11. Method according to one of Claims 8 to 10, **characterized in that** the mounting operation is monitored by a force/displacement measuring device.

12. Method of manufacturing a torsional vibration damper according to one of Claims 1 to 7, **characterized in that,** as the connecting element, a sleeve part (4) which is provided with a displaceable pin part (3) is produced in a common injection moulding die by injection moulding.

13. Method according to Claim 12, **characterized in that** the pin part (3) and the sleeve part (4) are removed from the mould after manufacturing.

14. Method according to Claim 13, **characterized in that,** during the removal from the mould, the pin part (3) is partially pushed into the sleeve part (4).

## Revendications

1. Amortisseur de vibrations torsionnelles pour un véhicule comprenant une partie d'entrée (1) prévue en tant que masse primaire et une partie de sortie (2) prévue en tant que masse secondaire, qui sont bloquées contre tout mouvement relatif au moyen d'une protection de montage, la protection de montage présentant au moins un élément de connexion, dans l'état monté de l'élément de connexion, une première portion de l'élément de connexion étant associée à la masse primaire et une deuxième portion à la masse secondaire, et les deux portions pouvant être séparées l'une de l'autre pour desserrer la protection de montage par mise en service de l'amortisseur de vibrations torsionnelles, l'élément de connexion présentant une partie de douille (4) et une partie de tourillon (3) déplaçable par rapport à celle-ci mais maintenue de manière imperdable.

2. Amortisseur de vibrations torsionnelles selon la revendication 1, **caractérisé en ce que** la partie de douille (4) et la partie de tourillon (3) présentent à chaque fois au moins une région correspondante destinée à la rupture (5, 5').

3. Amortisseur de vibrations torsionnelles selon la revendication 2, **caractérisé en ce que** la région destinée à la rupture (5, 5') est réalisée à chaque fois sous forme d'entaille au niveau de la partie de douille (4) et au niveau de la partie de tourillon (3).

4. Amortisseur de vibrations torsionnelles selon l'une quelconque des revendications précédentes, **caractérisé en ce que** le diamètre extérieur de la partie de tourillon (3) est adapté au diamètre intérieur de la partie de douille (4).

5. Amortisseur de vibrations torsionnelles selon l'une quelconque des revendications précédentes, **caractérisé en ce que** la région périphérique de la partie de douille (4) est adaptée au diamètre intérieur respectif de l'alésage de la partie d'entrée (1) recevant la portion respective de la partie de douille (4) et de la partie de sortie (2).

6. Amortisseur de vibrations torsionnelles selon l'une quelconque des revendications précédentes, **caractérisé en ce que** l'extrémité de la partie de douille (4) associée à la partie d'entrée (1) est réalisée sous forme de bord de bride (6).

7. Amortisseur de vibrations torsionnelles selon la revendication 6, **caractérisé en ce que** l'extrémité de la partie de douille (4) associée à la partie de sortie (2) présente au moins un élément d'encliquetage (7) agissant en tant que contrebutée pour le bord de bride (6).

8. Procédé de montage d'une protection de montage dans un amortisseur de vibrations torsionnelles selon l'une quelconque des revendications 1 à 7, dans lequel l'élément de connexion est fixé avec une partie d'entrée (1) et une partie de sortie (2) de l'amortisseur de vibrations torsionnelles, **caractérisé en ce que** l'élément de connexion présente une partie de douille (4) et une partie de tourillon (3) pouvant être enfoncée dans celle-ci, et pour le verrouillage de la partie d'entrée (1) à la partie de sortie (2), la partie de tourillon est enfoncée dans la partie de douille (4).

9. Procédé selon la revendication 8, **caractérisé en ce que** pour enfoncer la partie de tourillon (3), on utilise un outil de montage (17).

10. Procédé selon la revendication 9, **caractérisé en ce que** la partie de douille (4) est d'abord fixée par l'outil de montage (17) avec la partie de tourillon prémontée (3) sur la partie d'entrée (1) et sur la partie de sortie (2), et **en ce qu'**ensuite la partie de tourillon (3) est complètement enfoncée dans la partie de douille (4).

11. Procédé selon l'une quelconque des revendications 8 à 10, **caractérisé en ce que** l'opération de montage est contrôlée par un dispositif de mesure force-distance.

12. Procédé de fabrication d'un amortisseur de vibrations torsionnelles selon l'une quelconque des revendications 1 à 7, **caractérisé en ce que** l'on fabrique en tant qu'élément de connexion une partie de douille (4) pourvue d'une partie de tourillon (3) coulissante par moulage par injection dans un outil de moulage par injection commun.

13. Procédé selon la revendication 12, **caractérisé en ce que** la partie de tourillon (3) et la partie de douille (4) sont démoulées après la fabrication.

14. Procédé selon la revendication 13, **caractérisé en ce que** la partie de tourillon (3) est enfoncée en partie dans la partie de douille (4) lors du démoulage.
